# EUROPÄISCHE PATENTSCHRIFT

(11) **EP 3 032 093 B1**
(45) Veröffentlichungstag und Bekanntmachung des Hinweises auf die Patenterteilung: **13.02.2019**
(21) Anmeldenummer: 15197492.0
(22) Anmeldetag: 02.12.2015
(51) Int. Cl.: F03D 1/06

(54) **BEFESTIGUNGSVORRICHTUNG ZUR BEFESTIGUNG EINES ROTORBLATTES AN EINER ROTORNABE EINER WINDKRAFTANLAGE**
FASTENING DEVICE FOR FASTENING A ROTOR BLADE TO A ROTOR HUB OF A WIND ENERGY PLANT
DISPOSITIF DE FIXATION D'UNE PALE DE ROTOR SUR UN MOYEU DE ROTOR D'UNE ÉOLIENNE

(30) Priorität: 12.12.2014 DE 102014018280
(43) Veröffentlichungstag der Anmeldung: 15.06.2016
(73) Patentinhaber: innogy SE, 45128 Essen (DE)
(72) Erfinder: DAUM, Karlheinz, 67133 Maxdorf (DE)
(74) Vertreter: Richly & Ritschel Patentanwälte PartG mbB

(56) Entgegenhaltungen:
- EP-A1- 0 309 129
- EP-A1- 2 351 948
- EP-A2- 0 057 272
- EP-A2- 1 878 915
- DE-C1- 4 313 809

## Beschreibung

Die vorliegende Erfindung betrifft eine Befestigungsvorrichtung zur Befestigung eines Rotorblattes an einer Rotornabe einer Windkraftanlage. Ferner betrifft die vorliegende Erfindung ein Nachrüstsatz zur Sicherung einer Befestigung eines Rotorblattes an einer Rotornabe einer Windkraftanlage. Weiterhin betrifft die vorliegende Erfindung auch eine Windkraftanlage mit zumindest einem mittels der erfindungsgemäßen Befestigungsvorrichtung an einer Rotornabe befestigten Rotorblatt.

Aus dem Stand der Technik ist es bekannt, ein Rotorblatt an einer Rotornabe mittels einer Vielzahl von Dehnungsbolzen und Befestigungsmuttern zu befestigen. Die jeweiligen Dehnungsbolzen umfassen einen ersten Gewindeabschnitt und einen zweiten Gewindeabschnitt, zwischen denen ein Dehnungsbereich mit einem verminderten Außendurchmesser angeordnet ist. Die jeweiligen Dehnungsbolzen sind mittels der jeweiligen ersten Gewindeabschnitte in dafür vorgesehene Gewindebohrungen eines Befestigungsflansches des Rotorflügels eingeschraubt. Die Dehnungsbolzen sind durch Durchgangsbohrungen eines Befestigungsflansches der Rotornabe hindurchgeführt, sodass die jeweiligen zweiten Gewindeabschnitte aus der Rotornabe herausragen. Der Rotorflügel wird dann mittels Befestigungsschrauben, die auf den jeweiligen zweiten Gewindeabschnitten aufgeschraubt werden, an der Rotornabe befestigt.

Die EP0057272 A2 beschreibt die Befestigung eines Rotorblattes an eine Rotornarbe einer Windkraftanlage. Für die Befestigung wird eine Schraube durch eine Befestigungsöffnung eines Rotornarbenflansches hindurchgeführt. Die Schraube weißt dabei einen ersten endseitigen Gewindeabschnitt und einen zweiten endseitigen Gewindeabschnitt auf. Der erste Gewindeabschnitt ist dabei in eine Gewindebohrung des Rotorblattes eingeschraubt, und auf den zweiten Gewindeabschnitt ist eine Befestigungsmutter zur Befestigung des Rotorblattes an der Rotornarbe vorgesehen.

Für eine zuverlässige Befestigung des Rotorflügels an der Rotornabe müssen die jeweiligen Befestigungsmuttern mit vorbestimmten Drehmomenten angezogen werden, sodass eine Selbsthemmung zwischen dem zweiten Gewindeabschnitt und den Befestigungsmuttern einsetzt, wodurch ein Losschrauben der Befestigungsmuttern von den jeweiligen zweiten Gewindeabschnitten verhindert wird.

Trotz Selbsthemmung der Befestigungsmuttern können sich diese im Laufe der Zeit von den zweiten Gewindeabschnitten lösen, sodass eine zuverlässige Verbindung des Rotorblattes an der Rotornabe nicht mehr gewährleistet ist. Beispielsweise kann es durch die Materialauswahl für die Rotorflügel notwendig sein, die Befestigungsmuttern mit einem verminderten Drehmoment auf den zweiten Gewindeabschnitten anzuziehen, damit das Material des Rotorflügels nicht beschädigt wird. Wenn beispielsweise kohlefaserverstärkte Verbundstoffe für den Rotorflügel verwendet werden, können die Befestigungsmuttern nur mit einem verminderten Drehmoment angezogen werden.

Aus dem Stand der Technik ist es bekannt, zur Sicherung der Verbindung zwischen den Befestigungsmuttern und den Gewindeabschnitten zwischen dem Außengewinde und dem Innengewinde ein Klebemittel vorzusehen. Dies führt jedoch dazu, dass die Befestigungsmuttern von den jeweiligen Gewindeabschnitten nicht mehr gelöst werden können, was insbesondere im Falle einer Wartung oder eines Austausches eines Bauteils der Windkraftanlage problematisch ist.

Das Verwenden einer Kontermutter zum Sichern der Position der Befestigungsmutter auf dem Gewindeabschnitt führt zu dem Problem, dass das Festdrehen der Kontermutter häufig mit einem entgegengesetzten Drehen der Befestigungsmutter erfolgt, wodurch die Selbsthemmung zwischen der Befestigungsmutter und dem Gewindeabschnitt des Dehnungsbolzens aufgehoben werden kann.

Die EP 1878915 A2 beschreibt ein Rotorblatt für eine Windenergieanlage. Das Rotorblatt besteht aus mehreren sich entlang der Längsrichtung erstreckenden Teile, die mittels Einsätzen miteinander verbindbar sind. Zum Verbinden der Einsätze weißt jeder Einsatz jeweils eine Durchgangsbohrung auf, durch die eine Befestigungsschraube hindurchgeführt werden kann. Die Befestigungsschraube weißt dabei endseitig jeweils einen Gewindeabschnitt auf, auf den jeweils eine Mutter und eine Kontermutter aufschraubbar sind.

Der vorliegenden Erfindung liegt die Aufgabe zugrunde, eine Befestigungsvorrichtung bereitzustellen, mittels der eine zuverlässige und reversible Befestigung eines Rotorflügels an einer Rotornabe einer Windkraftanlage ermöglicht ist.

Diese Aufgabe wird durch eine Befestigungsvorrichtung mit den Merkmalen des Anspruchs 1 gelöst. Vorteilhafte Ausführungsformen sind in den von Anspruch 1 abhängigen Ansprüchen beschrieben.

Ferner liegt der vorliegenden Erfindung die Aufgabe zugrunde, einen Nachrüstsatz zur Sicherung einer Befestigung eines Rotorblattes an einer Rotornabe einer Windkraftanlage bereitzustellen, mittels dem eine zuverlässige und reversible Befestigung des Rotorflügels an der Rotornabe der Windkraftanlage ermöglicht ist und die nachträglich an der Windkraftanlage mit wenig Aufwand installierbar ist.

Diese Aufgabe wird durch einen Nachrüstsatz mit den Merkmalen des Anspruchs 9 gelöst. Vorteilhafte Ausführungsformen sind in den von Anspruch 9 abhängigen Ansprüchen beschrieben.

Des Weiteren liegt der vorliegenden Erfindung die Aufgabe zugrunde, eine Windkraftanlage mit einer sicheren Verbindung der Rotorflügel an der Rotornabe bereitzustellen.

Diese Aufgabe wird durch eine Windkraftanlage mit den Merkmalen des Anspruchs 10 gelöst.

Im Genaueren wird die der vorliegenden Erfindung zugrunde liegende Aufgabe durch eine Befestigungsvorrichtung zur Befestigung eines Rotorblattes an einer Rotornabe einer Windkraftanlage gelöst, wobei die Befestigungsvorrichtung einen durch eine Befestigungsöffnung eines Rotornabenflansches hindurchführbaren Dehnungsbolzen mit einem ersten endseitigen Gewindeabschnitt und einem zweiten endseitigen Gewindeabschnitt umfasst, wobei der erste Gewindeabschnitt zur Verbindung mit einer im Rotorblatt vorgesehenen Gewindebohrung ausgebildet ist. Die Befestigungsvorrichtung umfasst ferner eine auf den zweiten Gewindeabschnitt aufschraubbare Befestigungsmutter. Die Befestigungsvorrichtung ist dadurch ausgezeichnet, dass diese ferner eine Sicherungsmutter umfasst, die auf den zweiten Gewindeabschnitt aufschraubbar ist und mit der auf den zweiten Gewindeabschnitt aufgeschraubten Befestigungsmutter zumindest mittelbar in Kontakt bringbar ist, wobei die Sicherungsmutter auf den zweiten Gewindeabschnitt eine größere Klemmkraft ausübt als die Befestigungsmutter.

Durch eine entsprechende Ausbildung der Befestigungsvorrichtung wird ein Lösen der Befestigungsmutter von dem zweiten Gewindeabschnitt zuverlässig verhindert, da die mit dem Lösen der Befestigungsmutter verbundene Axialbewegung der Befestigungsmutter durch die Sicherungsmutter zuverlässig unterbunden wird. Auch ein sukzessives Lösen der Befestigungsmutter vom zweiten Gewindeabschnitt wird durch die erfindungsgemäße Befestigungsvorrichtung zuverlässig verhindert, da aufgrund der zusätzlichen Selbsthemmung der Sicherungsmutter ein Lösen der Sicherungsmutter von dem zweiten Gewindeabschnitt vermieden wird, wodurch auch ein axiales Bewegen der Befestigungsmutter von dem zweiten Gewindeabschnitt und somit ein Lösen der Befestigungsmutter verhindert wird. Darüber hinaus ist es aber auch möglich, die Sicherungsmutter mittels eines geeigneten Werkzeuges von dem zweiten Gewindeabschnitt zu lösen, wodurch Wartungsarbeiten an der Windkraftanlage ermöglicht werden. Beispielsweise kann ein Rotorflügel der Windkraftanlage von der Rotornabe demontiert werden, wobei die Befestigungsvorrichtung zum erneuten Befestigen des Rotorflügels oder eines weiteren Rotorflügels an der Rotornabe wiederverwendet werden kann.

Die Sicherungsmutter ist derart ausgestaltet, dass ein zum Aufschrauben der Sicherungsmutter auf den zweiten Gewindeabschnitt notwendiges Drehmoment größer ist als ein zum Herunterschrauben der Sicherungsmutter von dem zweiten Gewindeabschnitt notwendiges Drehmoment. Dies wird dadurch bewirkt, dass die Sicherungsmutter beim Aufschrauben auf den zweiten Gewindeabschnitt auf diesen eine Klemmkraft ausübt, die die Sicherungsmutter beim Herunterschrauben von dem zweiten Gewindeabschnitt nicht oder lediglich nur vermindert ausübt.

Die Befestigungsmutter kann als Bundmutter ausgebildet sein. Der Bund der Bundmutter ist dann an den Rotornabenflansch anlegbar. Die Dehnungsbolzen dienen als Verbindungsbolzen und können auch als solche bezeichnet werden. Mittels der auf den zweiten Gewindeabschnitt aufgeschraubten Befestigungsmutter ist auf den Befestigungsflansch der Rotornabe eine Befestigungskraft in Form einer Druckkraft ausübbar.

Vorzugsweise weist die Sicherungsmutter einen Halsfortsatz mit einer darin angeordneten Nut und eine in dieser Nut angeordnete Klemmscheibe mit einem Klemmscheibeninnengewinde auf. Die Klemmscheibe ist dabei zwischen einer Freigabestellung und einer Klemmstellung innerhalb der Nut verkippbar und/oder verformbar. In der Freigabestellung ist das Klemmscheibeninnengewinde bezüglich eines Innengewindes der Sicherungsmutter axial versetzt, sodass der zweite Gewindeabschnitt nicht gleichzeitig mit dem Innengewinde der Sicherungsmutter und dem Klemmschraubeninnengewinde in Eingriff bringbar ist. Die Klemmscheibe ist von der Freigabestellung in die Klemmstellung dadurch verkippbar und/oder verformbar, dass die Sicherungsmutter auf den zweiten Gewindeabschnitt aufgeschraubt wird, sodass der zweite Gewindeabschnitt mit einem Innengewinde der Sicherungsmutter und dem Klemmscheibeninnengewinde in Eingriff steht.

Durch eine entsprechende Ausbildung der Sicherungsmutter ist eine zuverlässige Selbsthemmung der Verbindung zwischen dem zweiten Gewindeabschnitt und der Sicherungsmutter gewährleistet, sodass ein Lösen der Sicherungsmutter und somit der Befestigungsmutter von dem zweiten Gewindeabschnitt erschwert und entgegengewirkt wird.

Vorzugsweise umfasst die Befestigungsvorrichtung ferner eine zwischen die Befestigungsmutter und die Sicherungsmutter positionierbare und auf den zweiten Gewindeabschnitt aufschiebbare Ausgleichsscheibe.

Dadurch wird ermöglicht, dass ein Ende der Sicherungsmutter hin zum Dehnungsbolzen einen derartigen Abstand aufweist, dass beispielsweise eine Ultraschallmessvorrichtung zur Vermessung der Länge des Bolzens auf die Sicherungsmutter aufschraubbar oder im generellen an der Sicherungsmutter befestigbar ist.

Weiter vorzugsweise umfasst die Befestigungsvorrichtung ferner einen Sicherungsdraht, der mit der Sicherungsmutter verbindbar und/oder verbunden ist, wobei der Sicherungsdraht ferner mit dem Rotornabenflansch auf Spannung verbindbar und/oder verbunden ist. Bei einem Herunterschrauben der Sicherungsmutter von dem zweiten Gewindeabschnitt wird der Sicherungsdraht derart auf einen Außenumfang der Sicherungsmutter aufgewickelt, dass der Sicherungsdraht dem Herunterschrauben der Sicherungsmutter vom zweiten Gewindeabschnitt entgegenwirkt. Durch Herunterschrauben der Sicherungsmutter vom zweiten Gewindeabschnitt wird der Sicherungsdraht also weiter gespannt.

Durch eine entsprechende Ausbildung der Befestigungsvorrichtung wird ein Lösen der Sicherungsmutter und somit auch ein Lösen der Befestigungsmutter vom zweiten Gewindeabschnitt nochmals mehr entgegengewirkt, sodass die Verbindung des Rotorflügels an der Rotornabe nochmals zuverlässiger ausgestattet ist.

In einer anderen bevorzugten Ausführung umfasst die Befestigungsvorrichtung ferner einen Sicherungsdraht, der mit einer ersten Sicherungsmutter verbindbar und/oder verbunden ist. Der Sicherungsdraht ist ferner mit einer zweiten Sicherungsmutter, die der ersten Sicherungsmutter auf dem Rotornabenflansch benachbart angeordnet ist, auf Spannung verbindbar und/oder verbunden. Bei einem Herunterdrehen der ersten Sicherungsmutter von dem zweiten Gewindeabschnitt wird der Sicherungsdraht derart auf einen Außenumfang der ersten Sicherungsmutter aufgewickelt, dass der Sicherungsdraht einem Herunterschrauben der ersten Sicherungsmutter vom zweiten Gewindeabschnitt entgegenwirkt.

Wenn es sich beispielsweise um Rechtsgewinde bei dem jeweiligen zweiten Gewindeabschnitt handelt, dann wird ein Linksdrehen, das heißt ein Herunterdrehen der Sicherungsmutter vom zweiten Gewindeabschnitt, mit einem entgegengesetzten Drehen, das heißt mit einem Rechtsdrehen der benachbarten Sicherungsmutter, induziert, da die benachbarte Sicherungsmutter, das heißt die zweite Sicherungsmutter, mit der ersten Sicherungsmutter über den Draht verbunden ist.

Durch eine entsprechende Ausbildung der Befestigungsvorrichtung wird ein Lösen der Sicherungsmutter und somit auch ein Lösen der Befestigungsmutter vom zweiten Gewindeabschnitt nochmals mehr entgegengewirkt, sodass die Verbindung des Rotorflügels an der Rotornabe nochmals zuverlässiger ausgestattet ist.

Vorzugsweise weist die Sicherungsmutter zumindest eine senkrecht zur Durchgangsöffnung der Sicherungsmutter verlaufende Durchgangsbohrung auf und der Sicherungsdraht ist durch die Durchgangsbohrung hindurchgeführt. Eine entsprechende Verbindung des Sicherungsdrahts zur Sicherungsmutter ist besonders stabil. Ferner können auf diese Art und Weise zueinander benachbarte Sicherungsmuttern miteinander gekoppelt werden.

Weiter vorzugsweise weist die Sicherungsmutter drei jeweils zur Durchgangsöffnung der Sicherungsmutter verlaufende Durchgangsbohrungen auf, durch die jeweils ein Sicherungsdraht hindurchgeführt ist. Dies erhöht nochmals die Sicherheit, dass die Sicherungsmutter nicht von dem zweiten Gewindeabschnitt losgedreht wird.

Weiter vorzugsweise umfasst die Sicherungsmutter eine Halteeinrichtung zum Halten eines Ultraschalltransceivers. Die Halteeinrichtung kann beispielsweise als Innengewinde oder als Außengewinde auf der Sicherungsmutter ausgebildet sein.

Die der vorliegenden Erfindung zugrunde liegende Aufgabe wird auch durch einen Nachrüstsatz zur Sicherung einer Befestigung eines Rotorblattes an einer Rotornabe einer Windkraftanlage gelöst, wobei das Rotorblatt mit der Rotornabe mittels eines durch eine Befestigungsöffnung eines Rotornabenflansches hindurchgeführten Dehnungsbolzens verbunden ist, wobei der Dehnungsbolzen einen ersten endseitigen Gewindeabschnitt und einem zweiten endseitigen Gewindeabschnitt aufweist, wobei der erste Gewindeabschnitt zur Verbindung mit einer im Rotorblatt vorgesehenen Gewindebohrung ausgebildet ist, und wobei eine auf den zweiten Gewindeabschnitt aufgeschraubte Befestigungsmutter den Rotorflügel gegen den Rotornabenflansch presst, wobei der Nachrüstsatz eine Sicherungsmutter umfasst, die auf den zweiten Gewindeabschnitt aufschraubbar ist und mit der auf den zweiten Gewindeabschnitt aufgeschraubten Befestigungsmutter zumindest mittelbar in Kontakt bringbar ist, wobei die Sicherungsmutter bei einem Aufschrauben auf den zweiten Gewindeabschnitt im Vergleich zu einem Herunterschrauben von dem zweiten Gewindeabschnitt auf den zweiten Gewindeabschnitt eine erhöhte Klemmkraft ausübt.

Vorzugsweise umfasst der Nachrüstsatz ferner eine zwischen die Befestigungsmutter und die Sicherungsmutter positionierbare und auf den zweiten Gewindeabschnitt aufschiebbare Ausgleichsscheibe.

Weiter vorzugsweise umfasst der Nachrüstsatz ferner einen Sicherungsdraht, der mit einer ersten Sicherungsmutter und mit dem Rotornabenflansch und/oder mit einer weiteren Sicherungsmutter verbindbar ist.

Die der vorliegenden Erfindung zugrunde liegende Aufgabe wird auch durch eine Windanlage mit einer Rotornabe und zumindest einem Rotorblatt gelöst, wobei das Rotorblatt an der Rotornabe mittels einer oben beschriebenen Verbindungsvorrichtung befestigt ist.

Weitere Vorteile, Einzelheiten und Merkmale der Erfindung ergeben sich nachfolgend aus dem erläuterten Ausführungsbeispiel. Dabei zeigen im Einzelnen:
- Figur 1:: eine Draufsicht auf einen Befestigungsflansch eines Rotorflügels;
- Figur 2:: eine Querschnittsdarstellung des Befestigungsflansches entlang der in Figur 1 dargestellten Schnittkante A-A;
- Figur 3:: eine Vergrößerung des mit Z gekennzeichneten Bereiches des in Figur 2 dargestellten Befestigungsflansches;
- Figur 4:: eine Vergrößerung des mit Y gekennzeichneten Bereiches des in Figur 1 gezeigten Befestigungsflansches;
- Figur 5:: eine Querschnittsdarstellung der erfindungsgemäßen Befestigungsvorrichtung;
- Figur 6a:: ein Schnitt durch einen Sicherungsmutter-Rohling mit einer eingelegten Klemmscheibe;
- Figur 6b:: ein Schnitt durch eine fertig ausgearbeitete Sicherungsmutter;
- Figur 7a:: eine Draufsicht auf die erfindungsgemäße Befestigungsvorrichtung samt eines Sicherungsdrahts zum Sichern von drei Befestigungsmuttern; und
- Figur 7b:: eine Draufsicht auf die erfindungsgemäße Befestigungsvorrichtung samt eines Sicherungsdrahts zum Sichern von zwei Befestigungsmuttern.

In der nun folgenden Beschreibung bezeichnen gleiche Bezugszeichen gleiche Bauteile beziehungsweise gleiche Merkmale, sodass eine in Bezug auf eine Figur durchgeführte Beschreibung bezüglich eines Bauteils auch für die anderen Figuren gilt, damit eine wiederholende Beschreibung vermieden wird. Ferner sind einzelne Merkmale, die in Zusammenhang mit einer Ausführungsform beschrieben wurden, auch separat in andere Ausführungsformen verwendbar.

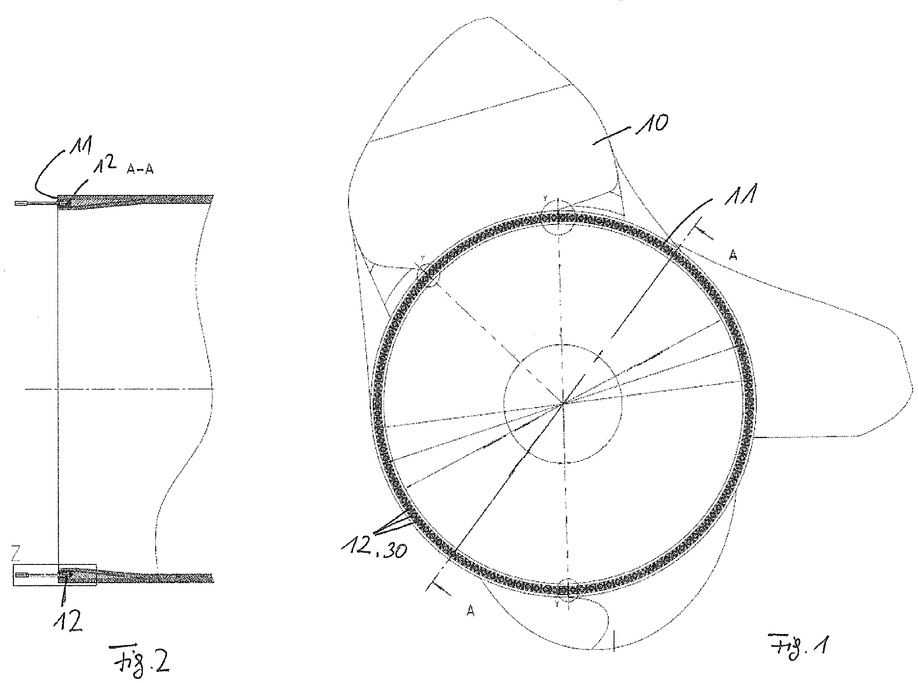

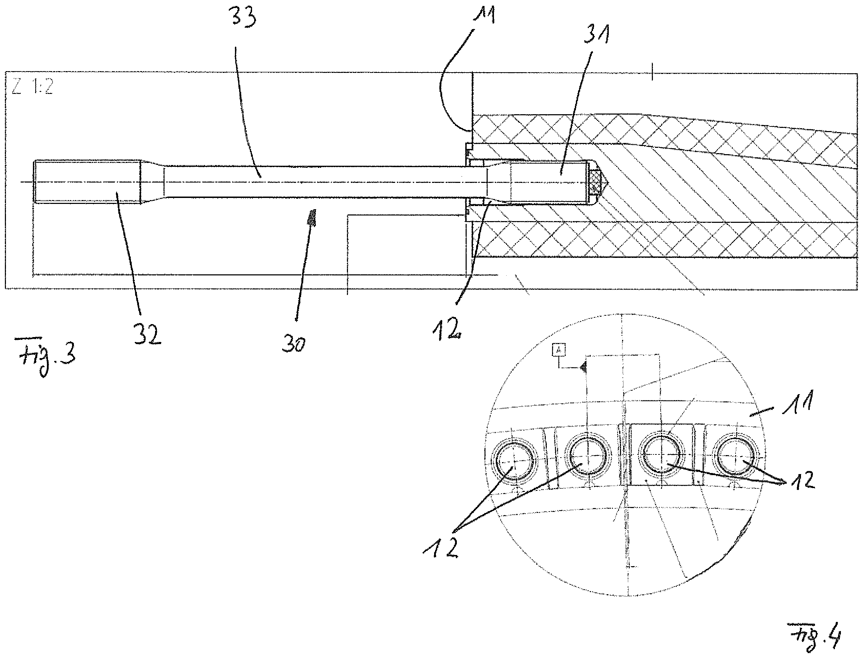

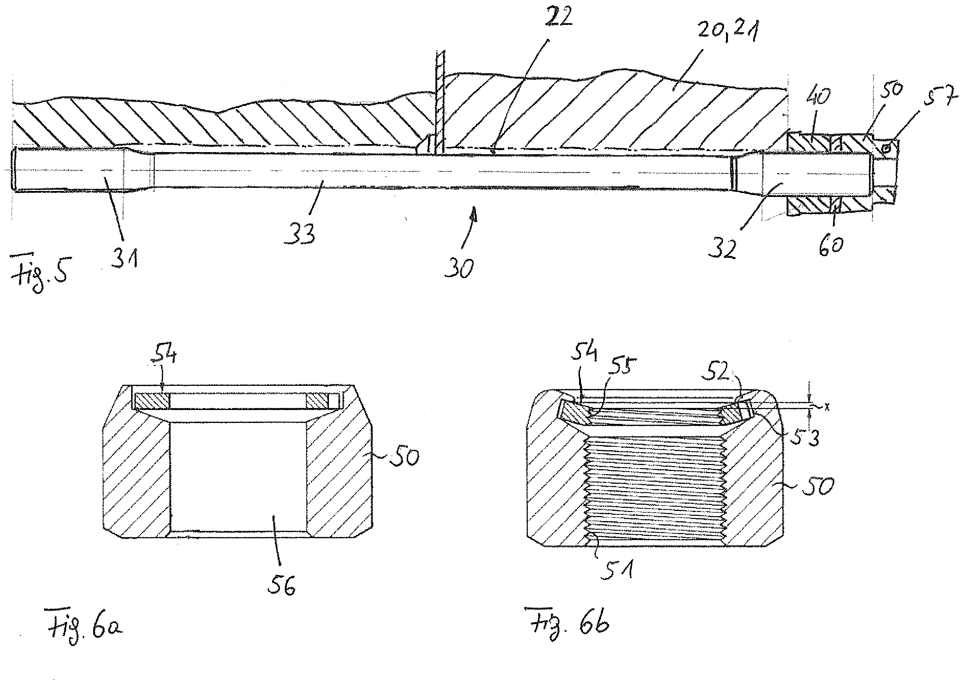

In den Figuren 1 bis 4 ist ein Rotorblatt 10 im Bereich dessen Befestigungsflansches 11 dargestellt. Insbesondere ist in Figur 1 eine Draufsicht auf den Befestigungsflansch 1 dargestellt, in dem eine Vielzahl von Gewindebohrungen 12 vorgesehen sind, in die jeweils Dehnungsbolzen 30 eingeschraubt sind. Die Befestigung der Dehnungsbolzen 30 in die dafür vorgesehene Gewindebohrung 12 ist im Detail in den Figuren 2 und 3 dargestellt. Eine Detailansicht der Anordnung der Gewindebohrungen 12 auf dem Befestigungsflansch 11 ist in Figur 4 dargestellt. Bei dem dargestellten Ausführungsbeispiel sind in dem Befestigungsflansch 11 128 Gewindebohrungen 12 zur Befestigung des Rotorblattes 10 an einem in Figur 5 im Querschnitt dargestellten Rotornabenflansch 21 einer Rotornabe 20 vorgesehen.

Wie insbesondere aus Figur 3 ersichtlich ist, ist der Dehnungsbolzen 30 mittels eines ersten Gewindeabschnitts 31 in die Gewindebohrung 12 eingeschraubt. Zur Befestigung an der Rotornabe 20, im Genaueren an dem Rotornabenflansch 21, wird der Befestigungsflansch 11 des Rotorblattes 10 dem Rotornabenflansch 21 gegenüberliegend positioniert, sodass die Dehnungsbolzen 30 durch dafür vorgesehene Befestigungsöffnungen 22 im Rotornabenflansch 21 hindurchtragen. Anschließend wird der Rotornabenflansch 21 mittels einer auf den zweiten Gewindeabschnitt 32 des Dehnungsbolzens 30 aufgeschraubten Befestigungsmutter 40 gegen den Rotornabenflansch 21 mit einem vorgegebenen Drehmoment festgezogen.

Aufgrund der permanenten Belastung der Verbindung zwischen dem Rotorblatt 10 und der Rotornabe 20 kann sich die Verbindung zwischen der Befestigungsmutter 40 und dem zweiten Gewindeabschnitt 32 des Dehnungsbolzens 30 im Laufe der Zeit lösen.

In Figur 5 ist eine Befestigungsvorrichtung gemäß der vorliegenden Erfindung im Querschnitt dargestellt. Die Befestigungsvorrichtung ist zur Befestigung eines Rotorblattes 10 an einer Rotornabe 20 einer Windkraftanlage ausgebildet. Die Befestigungsvorrichtung umfasst einen durch eine Befestigungsöffnung 22 des Rotornabenflansches 21 hindurchführbaren Dehnungsbolzen 30 mit einem ersten endseitigen Gewindeabschnitt 31, der in eine dafür vorgesehene Gewindebohrung 12 des Befestigungsflansches 11 eingeschraubt ist. Eine Befestigungsmutter 40 ist auf den zweiten Gewindeabschnitt 32 des Dehnungsbolzens 30 aufgeschraubt, wobei ein Bund der auch als Bundmutter zu bezeichnenden Befestigungsmutter 40 auf einer Rückseite des Rotornabenflansches 21 anliegt. Somit werden der Rotornabenflansch 21 und der Befestigungsflansch 11 aufeinander zugedrückt.

Wie aus Figur 5 ersichtlich ist, ist auf den zweiten Gewindeabschnitt 32 zusätzlich zur Befestigungsmutter 40 eine Sicherungsmutter 50, die auch als Stoppmutter 50 bezeichnet werden kann, aufgeschraubt, wobei zwischen der Sicherungsmutter 50 und der Befestigungsmutter 40 eine Ausgleichsscheibe 60 angeordnet ist. Die Sicherungsmutter 50 bewirkt, dass einem Losschrauben bzw. Herunterschrauben der Befestigungsmutter 40 von dem zweiten Gewindeabschnitt 32 entgegengewirkt wird, da die Sicherungsmutter 50 auf den zweiten Gewindeabschnitt 50 eine größere Klemmkraft ausübt als die Befestigungsmutter 40.

In Figur 6b ist ein Schnitt durch die in Figur 5 dargestellte Sicherungsmutter 50 dargestellt, wobei in Figur 6a ein Sicherungsmutter-Rohling mit einer eingelegten Klemmscheibe 54 dargestellt ist. Wie aus Figur 6b ersichtlich ist, weist die Sicherungsmutter 50 einen Halsfortsatz 52 mit einer darin angeordneten Nut 53 und eine in dieser Nut 53 angeordnete Klemmscheibe 54 auf, wobei die Klemmscheibe 54 ein Klemmscheibeninnengewinde 55 aufweist. Die Klemmscheibe 54 ist verformt, sodass das Klemmscheibeninnengewinde 55 bezüglich eines Innengewindes 51, das seitlich an einer Durchgangsöffnung 56 der Sicherungsmutter 50 ausgebildet ist, axial versetzt ist, sodass ein Gewindebolzen, im Genaueren der zweite Gewindeabschnitt 32, nicht gleichzeitig mit dem Innengewinde 51 der Sicherungsmutter 50 und dem Klemmscheibeninnengewinde 55 in Eingriff stehen kann. Diese Positionierung des Klemmscheibeninnengewindes 55 zum Innengewinde 51 wird auch als Freigabestellung der Klemmscheibe 54 bezeichnet.

Die Klemmscheibe 54 ist von der Freigabestellung in eine Klemmstellung dadurch verkippbar und/oder verformbar, dass die Sicherungsmutter 50 auf einen Gewindebolzen, im Genaueren auf den zweiten Gewindeabschnitt 32, aufgeschraubt wird, sodass der zweite Gewindeabschnitt 32 mit dem Innengewinde 51 der Sicherungsmutter 50 und dem Klemmscheibeninnengewinde 55 in Eingriff steht. Aufgrund der Verformung der Klemmscheibe 54 übt die Klemmscheibe 55 in der Klemmstellung auf den zweiten Gewindeabschnitt 32 sowohl eine axiale als auch eine radiale Klemmkraft aus.

Durch eine entsprechende Ausbildung der Sicherungsmutter 50 ist das Losdrehmoment auch nach mehrmaligem Auf- und Abschrauben ausreichend hoch, um ein Losdrehen der Sicherungsmutter 50 von dem zweiten Gewindeabschnitt 32 zu vermeiden.

Mit anderen Worten ist im Kopf der Sicherungsmutter 50 ein federnder Metallring 54 mit Gewinde 55 fest eingepresst. Das Klemmscheibeninnengewinde 55 und das Innengewinde 51 der Sicherungsmutter 50 sind steigungsversetzt. Bei einer Montage auf einer Schraube oder auf einem Gewindebolzen verspannt sich der Klemmring 54 durch den Steigungsversatz und bewirkt eine axiale und radiale Klemmwirkung. Dabei wird der zweite Gewindeabschnitt 32 des Dehnungsbolzens 30 nicht beschädigt, sodass die Sicherungsmutter 50 mehrfach verwendet werden kann.

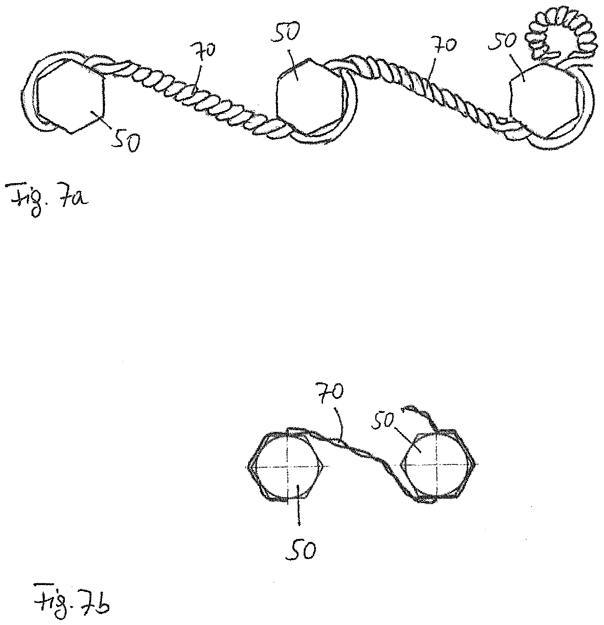

Wie aus Figur 5 ersichtlich ist, weist die Sicherungsmutter 50 ferner zumindest eine Durchgangsbohrung 57 auf, die senkrecht zur Durchgangsöffnung 56 der Sicherungsmutter 50 orientiert ist. In den Figuren 7a und 7b ist dargestellt, dass durch die Durchgangsbohrungen 57 von benachbarten Sicherungsmuttern 50 ein Sicherungsdraht 70 derart hindurchgeführt ist, dass bei einem Losschrauben bzw. Herunterschrauben einer der Sicherungsmuttern 50 von dem zweiten Gewindeabschnitt 32 der Sicherungsdraht 70 derart auf einem Außenumfang der losgetreten Sicherungsmutter 50 aufgewickelt wird, dass der Sicherungsdraht 70 dem Herausschrauben der Sicherungsmutter 50 vom zweiten Gewindeabschnitt 32 entgegenwirkt.

Wenn beispielsweise die in Figur 7a in der Mitte dargestellte Sicherungsmutter 50 nach links gedreht wird, also losgeschraubt wird, dann bewirkt diese Drehung der mittigen Sicherungsschraube aufgrund der Kopplung mit den benachbarten Sicherungsschrauben 50 mittels des Sicherungsdrahts 70 eine jeweilige Rechtsdrehung der benachbarten Sicherungsdrahte 50, also ein Festdrehen der benachbarten Sicherungsmuttern 50. Folglich ist das Losdrehen bzw. Herunterschrauben einer Sicherungsmutter 50 durch die Koppelung mit benachbarten Sicherungsmuttern 50 mittels des Sicherungsdrahtes 70 gehemmt. In Figur 7b ist dieses Wirkprinzip bei einem Paar von Sicherungsschrauben 50 dargestellt, die mittels eines Sicherungsdrahtes des 70 auf entsprechende Art und Weise einander gekoppelt sind.

### Bezugszeichenliste:

- 10: Rotorblatt / Rotorflügel (einer Windkraftanlage)
- 11: Befestigungsflansch (des Rotorblattes)
- 12: Gewindebohrung (im Befestigungsflansch des Rotorblattes)
- 20: Rotornabe (einer Windkraftanlage)
- 21: Rotornabenflansch
- 22: Befestigungsöffnung (im Rotornabenflansch)
- 30: Dehnungsbolzen
- 31: erster Gewindeabschnitt (des Dehnungsbolzens)
- 32: zweiter Gewindeabschnitt (des Dehnungsbolzens)
- 33: Dehnungsabschnitt (des Dehnungsbolzens)
- 40: Befestigungsmutter (der Befestigungsvorrichtung)
- 50: Sicherungsmutter / Stoppmutter (der Befestigungsvorrichtung)
- 51: Innengewinde (der Sicherungsmutter)
- 52: Halsfortsatz (der Sicherungsmutter)
- 53: Nut (im Halsfortsatz der Sicherungsmutter)
- 54: Klemmscheibe / Klemmring / Gewinderingscheibe (der Sicherungsmutter)
- 55: Klemmscheibeninnengewinde / Klemmringinnengewinde
- 56: Durchgangsöffnung (der Sicherungsmutter)
- 57: Duchgangsbohrung / Tangentialbohrung (in der Sicherungsmutter)
- 60: Ausgleichsscheibe (der Befestigungsvorrichtung)
- 70: Sicherungsdraht (der Befestigungsvorrichtung)

## Patentansprüche

1. Befestigungsvorrichtung zur Befestigung eines Rotorblattes (10) an einer Rotornabe (20) einer Windkraftanlage, umfassend:
- einen durch eine Befestigungsöffnung (22) eines Rotornabenflansches (21) hindurchführbaren Dehnungsbolzen (30) mit einem ersten endseitigen Gewindeabschnitt (31) und einem zweiten endseitigen Gewindeabschnitt (32), wobei der erste Gewindeabschnitt (31) zur Verbindung mit einer im Rotorblatt (10) vorgesehenen Gewindebohrung (12) ausgebildet ist; und
- eine auf den zweiten Gewindeabschnitt (32) aufschraubbare Befestigungsmutter (40),
wobei die Befestigungsvorrichtung **dadurch gekennzeichnet ist, dass** diese ferner eine Sicherungsmutter (50) umfasst, die auf den zweiten Gewindeabschnitt (32) aufschraubbar ist und mit der auf den zweiten Gewindeabschnitt (32) aufgeschraubten Befestigungsmutter (40) zumindest mittelbar in Kontakt bringbar ist, wobei die Sicherungsmutter (50) auf den zweiten Gewindeabschnitt (32) eine größere Klemmkraft ausübt als die Befestigungsmutter (40).

2. Befestigungsvorrichtung nach Anspruch 1, **gekennzeichnet durch** die folgenden Merkmale:
- die Sicherungsmutter (50) weist einen Halsfortsatz (52) mit einer darin angeordneten Nut (53) und eine in dieser Nut (53) angeordneten Klemmscheibe (54) mit einem Klemmscheibeninnengewinde (55) auf;
- die Klemmscheibe (54) ist zwischen einer Freigabestellung und einer Klemmstellung innerhalbe der Nut (53) verkippbar und/oder verformbar;
- in der Freigabestellung ist das Klemmscheibeninnengewinde (55) bezüglich eines Innengewindes (51) der Sicherungsmutter (50) axial versetzt, so dass der zweite Gewindeabschnitt (32) nicht gleichzeitig mit dem Innengewinde (51) der Sicherungsmutter (50) und dem Klemmschraubeninnengewinde (55) in Eingriff stehen kann; und
- die Klemmscheibe (54) ist von der Freigabestellung in die Klemmstellung dadurch verkippbar und/oder verformbar, dass die Sicherungsmutter (50) auf den zweiten Gewindeabschnitt (32) aufgeschraubt wird, so dass der zweite Gewindeabschnitt (32) mit einem Innengewinde (51) der Sicherungsmutter (50) und dem Klemmscheibeninnengewinde (55) in Eingriff steht.

3. Befestigungsvorrichtung nach einem der vorhergehenden Ansprüche, **dadurch gekennzeichnet, dass** die Befestigungsvorrichtung ferner eine zwischen die Befestigungsmutter (40) und die Sicherungsmutter (50) positionierbare und auf den zweiten Gewindeabschnitt (32) aufschiebbare Ausgleichsscheibe (60) umfasst.

4. Befestigungsvorrichtung nach einem der vorhergehenden Ansprüche, **gekennzeichnet durch** die folgenden Merkmale:
- die Befestigungsvorrichtung umfasst ferner einen Sicherungsdraht (70), der mit der Sicherungsmutter (50) verbindbar und/oder verbunden ist;
- der Sicherungsdraht (70) ist ferner mit dem Rotornabenflansch (21) auf Spannung verbindbar und/oder verbunden; und
- bei einem Herunterschrauben der Sicherungsmutter (50) von dem zweiten Gewindeabschnitt (32) wird der Sicherungsdraht (70) derart auf einem Außenumfang der Sicherungsmutter (50) aufgewickelt, dass der Sicherungsdraht (70) dem Herunterschrauben der Sicherungsmutter (50) vom zweiten Gewindeabschnitt (32) entgegenwirkt.

5. Befestigungsvorrichtung nach einem der vorhergehenden Ansprüche, **gekennzeichnet durch** die folgenden Merkmale:
- die Befestigungsvorrichtung umfasst ferner einen Sicherungsdraht (70), der mit einer ersten Sicherungsmutter (50) verbindbar und/oder verbunden ist;
- der Sicherungsdraht (70) ist ferner mit einer zweiten Sicherungsmutter (50), die der ersten Sicherungsmutter (50) auf dem Rotornabenflansch (21) benachbart angeordnet ist, auf Spannung verbindbar und/oder verbunden; und
- bei einem Herunterschrauben der ersten Sicherungsmutter (50) von dem zweiten Gewindeabschnitt (32) wird der Sicherungsdraht (70) derart auf einen Außenumfang der Sicherungsmutter (50) aufgewickelt, dass der Sicherungsdraht (70) einem Herunterschrauben der Sicherungsmutter (50) vom zweiten Gewindeabschnitt (32) entgegenwirkt.

6. Befestigungsvorrichtung nach einem der Ansprüche 4 oder 5, **dadurch gekennzeichnet, dass** die Sicherungsmutter (50) zumindest eine senkrecht zur Durchgangsöffnung (56) der Sicherungsmutter (50) verlaufende Durchgangsbohrung (57) aufweist, und der Sicherungsdraht (70) durch die Durchgangsbohrung (57) hindurchgeführt ist.

7. Befestigungsvorrichtung nach Anspruch 6, **dadurch gekennzeichnet, dass** die Sicherungsmutter (50) drei jeweils senkrecht zur Durchgangsöffnung (56) der Sicherungsmutter (50) verlaufende Durchgangsbohrungen (57) aufweist, durch die jeweils ein Sicherungsdraht (70) hindurchgeführt ist.

8. Befestigungsvorrichtung nach einem der vorhergehenden Ansprüche, **dadurch gekennzeichnet, dass** die Sicherungsmutter (50) eine Halteeinrichtung zum Halten eines Ultraschalltransceivers umfasst.

9. Verfahren zur Sicherung einer Befestigung eines Rotorblattes (10) an einer Rotornabe (20) einer Windkraftanlage, wobei das Rotorblatt (10) mit der Rotornabe (20) mittels eines durch eine Befestigungsöffnung (22) eines Rotornabenflansches (21) hindurchgeführten Dehnungsbolzens (30) verbunden ist, wobei der Dehnungsbolzen (30) einen ersten endseitigen Gewindeabschnitt (31) und einem zweiten endseitigen Gewindeabschnitt (32) aufweist, wobei der erste Gewindeabschnitt (31) zur Verbindung mit einer im Rotorblatt (10) vorgesehenen Gewindebohrung (12) ausgebildet ist, und wobei eine auf den zweiten Gewindeabschnitt (32) aufgeschraubte Befestigungsmutter (40) das Rotorblatt (10) gegen den Rotornabenflansch (21) presst, wobei das Verfahren folgendes umfasst:
- Aufschrauben einer Sicherungsmutter (50) auf den zweiten Gewindeabschnitt (32) und zumindest mittelbar in Kontakt bringen der Sicherungsmutter (50) mit der auf den zweiten Gewindeabschnitt (32) aufgeschraubten Befestigungsmutter (40), wobei die Sicherungsmutter (50) beim Aufschrauben auf den zweiten Gewindeabschnitt (32) im Vergleich zu einem Herunterschrauben von dem zweiten Gewindeabschnitt (32) auf den zweiten Gewindeabschnitt (32) eine erhöhte Klemmkraft ausübt.

10. Verfahren nach Anspruch 9, **dadurch gekennzeichnet, dass** ferner eine Ausgleichsscheibe (60) zwischen die Befestigungsmutter (40) und die Sicherungsmutter (50) positioniert und auf den zweiten Gewindeabschnitt (32) aufgeschoben wird.

11. Verfahren nach einem der Ansprüche 9 oder 10, **dadurch gekennzeichnet, dass** ein Sicherungsdraht (70) mit einer ersten Sicherungsmutter (50) und mit dem Rotornabenflansch (21) und oder mit einer weiteren Sicherungsmutter (50) verbunden wird.

12. Windkraftanlage mit einer Rotornabe (20) und zumindest einem Rotorblatt (10), wobei das Rotorblatt (10) an der Rotornabe (20) mittels einer Befestigungsvorrichtung nach einem der Ansprüche 1 bis 8 befestigt ist.

## Claims

1. Fastening device for fastening a rotor blade (10) to a rotor hub (20) of a wind turbine, comprising:
- an expansion bolt (30) which can be guided through a fastening opening (22) of a rotor hub flange (21) and which has a first end-side threaded portion (31) and a second end-side threaded portion (32), wherein the first threaded portion (31) is designed for connection to a threaded bore (12) provided in the rotor blade (10); and
- a fastening nut (40) which can be screwed onto the second threaded portion (32),
wherein the fastening device is **characterized in that** it further comprises a securing nut (50) which can be screwed onto the second threaded portion (32) and can at least indirectly be brought into contact with the fastening nut (40) screwed onto the second threaded portion (32), wherein the securing nut (50) exerts a greater clamping force on the second threaded portion (32) than the fastening nut (40).

2. Fastening device according to Claim 1, **characterized by** the following features:
- the securing nut (50) has a neck extension (52) with a groove (53) arranged therein, and a clamping disc (54) arranged in this groove (53) and having a clamping disc internal thread (55);
- the clamping disc (54) can be tilted and/or deformed between a release position and a clamping position within the groove (53);
- in the release position, the clamping disc internal thread (55) is axially offset with respect to an internal thread (51) of the securing nut (50), with the result that the second threaded portion (32) cannot be simultaneously in engagement with the internal thread (51) of the securing nut (50) and the clamping screw internal thread (55); and
- the clamping disc (54) can be tilted and/or deformed from the release position into the clamping position by virtue of the securing nut (50) being screwed onto the second threaded portion (32), with the result that the second threaded portion (32) is in engagement with an internal thread (51) of the securing nut (50) and the clamping disc internal thread (55).

3. Fastening device according to one of the preceding claims, **characterized in that** the fastening device further comprises a compensation disc (60) which can be positioned between the fastening nut (40) and the securing nut (50) and which can be pushed onto the second threaded portion (32).

4. Fastening device according to one of the preceding claims, **characterized by** the following features:
- the fastening device further comprises a securing wire (70) which can be and/or is connected to the securing nut (50);
- the securing wire (70) can further be and/or is connected in tension to the rotor hub flange (21); and
- upon an unscrewing of the securing nut (50) from the second threaded portion (32), the securing wire (70) is wound on an outer periphery of the securing nut (50) in such a way that the securing wire (70) counteracts the unscrewing of the securing nut (50) from the second threaded portion (32).

5. Fastening device according to one of the preceding claims, **characterized by** the following features:
- the fastening device further comprises a securing wire (70) which can be and/or is connected to a first securing nut (50);
- the securing wire (70) can further be and/or is connected in tension to a second securing nut (50) which is arranged adjacent to the first securing nut (50) on the rotor hub flange (21); and
- upon an unscrewing of the first securing nut (50) from the second threaded portion (32), the securing wire (70) is wound on an outer periphery of the securing nut (50) in such a way that the securing wire (70) counteracts an unscrewing of the securing nut (50) from the second threaded portion (32).

6. Fastening device according to either of Claims 4 and 5, **characterized in that** the securing nut (50) has at least one through-bore (57) which extends perpendicularly to the through-opening (56) of the securing nut (50), and the securing wire (70) is guided through the through-bore (57) .

7. Fastening device according to Claim 6, **characterized in that** the securing nut (50) has three through-bores (57) which each extend perpendicularly to the through-opening (56) of the securing nut (50) and through each of which a securing wire (70) is guided.

8. Fastening device according to one of the preceding claims, **characterized in that** the securing nut (50) comprises a holding device for holding an ultrasonic transceiver.

9. Method for securing a fastening of a rotor blade (10) on a rotor hub (20) of a wind turbine, wherein the rotor blade (10) is connected to the rotor hub (20) by means of an expansion bolt (30) which is guided through a fastening opening (22) of a rotor hub flange (21), wherein the expansion bolt (30) has a first end-side threaded portion (31) and a second end-side threaded portion (32), wherein the first threaded portion (31) is designed for connection to a threaded bore (12) provided in the rotor blade (10), and wherein a fastening nut (40) screwed onto the second threaded portion (32) presses the rotor blade (10) against the rotor hub flange (21), wherein the method comprises the following:
- screwing a securing nut (50) onto the second threaded portion (32) and at least indirectly bringing the securing nut (50) into contact with the fastening nut (40) screwed onto the second threaded portion (32), wherein, upon screwing onto the second threaded portion (32), the securing nut (50) exerts, by contrast to an unscrewing from the second threaded portion (32), an increased clamping force on the second threaded portion (32).

10. Method according to Claim 9, **characterized in that**, furthermore, a compensation disc (60) is positioned between the fastening nut (40) and the securing nut (50) and pushed onto the second threaded portion (32).

11. Method according to either of Claims 9 and 10, **characterized in that** a securing wire (70) is connected to a first securing nut (50) and to the rotor hub flange (21) and/or to a further securing nut (50).

12. Wind turbine having a rotor hub (20) and at least one rotor blade (10), wherein the rotor blade (10) is fastened to the rotor hub (20) by means of a fastening device according to one of Claims 1 to 8.

## Revendications

1. Dispositif de fixation permettant de fixer une pale de rotor (10) sur un moyeu de rotor (20) d'une éolienne, comportant :
- un boulon à expansion (30) pouvant être guidé à travers une ouverture de fixation (22) d'un flasque de moyeu de rotor (21), le boulon à expansion comprenant une première partie filetée (31) côté extrémité et une deuxième partie filetée (32) côté extrémité, la première partie filetée (31) étant conçue pour la liaison à un alésage taraudé (12) prévu dans la pale de rotor (10) ; et
- un écrou de fixation (40) pouvant être vissé sur la deuxième partie filetée (32),
le dispositif de fixation étant **caractérisé en ce qu'**il comprend en outre un écrou de blocage (50) qui peut être vissé sur la deuxième partie filetée (32) et qui peut être amené en contact au moins indirectement avec l'écrou de fixation (40) vissé sur la deuxième partie filetée (32), l'écrou de blocage (50) exerçant sur la deuxième partie filetée (32) une plus grande force de serrage que l'écrou de fixation (40).

2. Dispositif de fixation selon la revendication 1, **caractérisé par** les caractéristiques suivantes :
- l'écrou de blocage (50) comprend un prolongement de col (52) dans lequel est disposée une rainure (53) et une rondelle de serrage (54) disposée dans cette rainure (53) et dotée d'un filetage intérieur de rondelle de serrage (55) ;
- la rondelle de serrage (54) peut être basculée et/ou déformée entre une position de libération et une position de serrage à l'intérieur de la rainure (53) ;
- dans la position de libération, le filetage intérieur de rondelle de serrage (55) est décalé axialement par rapport à un filetage intérieur (51) de l'écrou de blocage (50), de telle sorte que la deuxième partie filetée (32) ne puisse pas entrer en prise simultanément avec le filetage intérieur (51) de l'écrou de blocage (50) et le filetage intérieur de vis de serrage (55) ; et
- la rondelle de serrage (54) peut être basculée et/ou déformée de la position de libération à la position de serrage de telle sorte que l'écrou de blocage (50) soit vissé sur la deuxième partie filetée (32), de telle sorte que la deuxième partie filetée (32) soit en prise avec un filetage intérieur (51) de l'écrou de blocage (50) et avec le filetage intérieur de rondelle de serrage (55).

3. Dispositif de fixation selon l'une quelconque des revendications précédentes, **caractérisé en ce que** le dispositif de fixation comporte en outre une rondelle de compensation (60) pouvant être positionnée entre l'écrou de fixation (40) et l'écrou de blocage (50) et pouvant être enfilée sur la deuxième partie filetée (32).

4. Dispositif de fixation selon l'une quelconque des revendications précédentes, **caractérisé par** les caractéristiques suivantes :
- le dispositif de fixation comporte en outre un fil-frein (70) qui est et/ou peut être relié à l'écrou de blocage (50) ;
- le fil-frein (70) est et/ou peut être en outre relié de manière tendue au flasque de moyeu de rotor (21) ; et
- lors d'un vissage vers le bas de l'écrou de blocage (50) à partir de la deuxième partie filetée (32), le fil-frein (70) est enroulé sur une périphérie extérieure de l'écrou de blocage (50) de telle sorte que le fil-frein (70) s'oppose au vissage vers le bas de l'écrou de blocage (50) à partir de la deuxième partie filetée (32).

5. Dispositif de fixation selon l'une quelconque des revendications précédentes, **caractérisé par** les caractéristiques suivantes :
- le dispositif de fixation comporte en outre un fil-frein (70) qui est et/ou peut être relié à un premier écrou de blocage (50) ;
- le fil-frein (70) est et/ou peut être en outre relié de manière tendue à un deuxième écrou de blocage (50) qui est disposé de manière adjacente au premier écrou de blocage (50) sur le flasque de moyeu de rotor (21) ; et
- lors d'un vissage vers le bas du premier écrou de blocage (50) à partir de la deuxième partie filetée (32), le fil-frein (70) est enroulé sur une périphérie extérieure de l'écrou de blocage (50) de telle sorte que le fil-frein (70) s'oppose à un vissage vers le bas de l'écrou de blocage (50) à partir de la deuxième partie filetée (32).

6. Dispositif de fixation selon la revendication 4 ou 5, **caractérisé en ce que** l'écrou de blocage (50) comprend au moins un alésage traversant (57) s'étendant perpendiculairement à l'ouverture traversante (56) de l'écrou de blocage (50), et le fil-frein (70) est guidé à travers l'alésage traversant (57).

7. Dispositif de fixation selon la revendication 6, **caractérisé en ce que** l'écrou de blocage (50) comprend trois alésages traversants (57) s'étendant respectivement perpendiculairement à l'ouverture traversante (56) de l'écrou de blocage (50), alésages traversants à travers lesquels est guidé respectivement un fil-frein (70).

8. Dispositif de fixation selon l'une quelconque des revendications précédentes, **caractérisé en ce que** l'écrou de blocage (50) comporte un dispositif de retenue servant à retenir un émetteur-récepteur à ultrasons.

9. Procédé de blocage d'une fixation d'une pale de rotor (10) sur un moyeu de rotor (20) d'une éolienne, la pale de rotor (10) étant reliée au moyeu de rotor (20) au moyen d'un boulon à expansion (30) guidé à travers une ouverture de fixation (22) d'un flasque de moyeu de rotor (21), le boulon à expansion (30) comprenant une première partie filetée (31) côté extrémité et une deuxième partie filetée (32) côté extrémité, la première partie filetée (31) étant conçue pour la liaison à un alésage taraudé (12) prévu dans la pale de rotor (10), et un écrou de fixation (40) vissé sur la deuxième partie filetée (32) pressant la pale de rotor (10) contre le flasque de moyeu de rotor (21), le procédé consistant à :
- visser un écrou de blocage (50) sur la deuxième partie filetée (32) et amener l'écrou de blocage (50) en contact au moins indirect avec l'écrou de fixation (40) vissé sur la deuxième partie filetée (32), l'écrou de blocage (50) exerçant sur la deuxième partie filetée (32) une force de serrage accrue lors du vissage sur la deuxième partie filetée (32) par comparaison avec un vissage vers le bas à partir de la deuxième partie filetée (32).

10. Procédé selon la revendication 9, **caractérisé en ce qu'**en outre une rondelle de compensation (60) est positionnée entre l'écrou de fixation (40) et l'écrou de blocage (50) et enfilée sur la deuxième partie filetée (32).

11. Procédé selon la revendication 9 ou 10, **caractérisé en ce qu'**un fil-frein (70) est relié à un premier écrou de blocage (50) et au flasque de moyeu de rotor (21) et/ou à un autre écrou de blocage (50).

12. Éolienne comprenant un moyeu de rotor (20) et au moins une pale de rotor (10), la pale de rotor (10) étant fixée au moyeu de rotor (20) au moyen d'un dispositif de fixation selon l'une quelconque des revendications 1 à 8.
